# EUROPÄISCHE PATENTSCHRIFT

(11) **EP 2 106 984 B1**
(45) Veröffentlichungstag und Bekanntmachung des Hinweises auf die Patenterteilung: **28.07.2010**
(21) Anmeldenummer: 08006343.1
(22) Anmeldetag: 31.03.2008
(51) Int. Cl.: B61D 17/22

(54) **Faltenbalg**
Folded lining
Revêtement à plis

(43) Veröffentlichungstag der Anmeldung: 07.10.2009
(73) Patentinhaber: ATG Autotechnik GmbH, 22962 Siek (DE)
(72) Erfinder:
(74) Vertreter: Riesenberg, Axel

(56) Entgegenhaltungen:
- EP-A- 1 568 519
- EP-A- 1 568 520
- EP-A- 1 728 652
- EP-A- 1 810 852
- DE-C1- 10 238 673
- DE-U1- 20 020 061

## Beschreibung

Die Erfindung betrifft einen Faltenbalg, mit dem ein Übergang zwischen einem Vorderwagen und einem gelenkig mit dem Vorderwagen verbundenen Hinterwagen verkleidet wird. Bei dem Faltenbalg ist ein Faltenbalgboden lösbar an einem Faltenbalgkörper befestigt, wobei der Faltenbalgboden eine erste Leiste und der Faltenbalgkörper eine zweite Leiste aufweist s. z.B. EP.A1-1810 852. Es sind zwei Bohrungen ausgebildet, die sich jeweils sowohl durch die erste Leiste als auch durch die zweite Leiste hindurch erstrecken. Ein erster Bolzen und ein zweiter Bolzen sind in die Bohrungen eingeführt, um die beiden Leisten relativ zueinander zu fixieren.

Die Erfindung betrifft ferner ein Verfahren zum Herstellen einer lösbaren Verbindung zwischen einem Faltenbalgboden und einem Faltenbalgkörper. Bei dem Verfahren wird eine Leiste des Faltenbalgbodens, die zwei Bohrungen aufweist, mit einer Leiste des Faltenbalgkörpers, die ebenfalls zwei Bohrungen aufweist, derart ausgerichtet, dass sich die Bohrungen zu einer ersten fluchtenden Bohrung und einer zweiten fluchtenden Bohrung ergänzen. Ein erster Bolzen und ein zweiter als separates Teil vorliegender Bolzen werden in die fluchtenden Bohrungen eingeführt.

Faltenbälge dieser Art dienen dazu, es einem Passagier zu ermöglichen, während der Fahrt zwischen dem Vorderwagen und dem Hinterwagen zu wechseln, ohne der Witterung ausgesetzt zu sein. Der Faltenbalgkörper unterliegt normalerweise einem geringeren Verschleiß als der Faltenbalgboden. Vielfach ist der Faltenbalgboden deswegen so ausgebildet, dass er separat vom Faltenbalgkörper ausgetauscht werden kann.

Wenn die Verbindung zwischen den Leisten durch in die fluchtenden Bohrungen eingesteckte Bolzen hergestellt wird, so müssen die Bolzen dagegen gesichert werden, dass sie sich unbeabsichtigt wieder aus den Bohrungen lösen. Ist für die Sicherung eine Schraubverbindung oder eine Nietverbindung vorgesehen, so muss bei der Montage jeder Bolzen einzeln gesichert werden. Dies ist umständlich und kostet Zeit. Ferner haben Schraubverbindungen den Nachteil, dass sie sich im Laufe der zeit durch von der Straße aufgewirbelten Schmutz festsetzen. Sie lassen sich deswegen häufig nur schwierig wieder lösen, wenn der Faltenbalg ausgetauscht werden soll. Auch bei Nietverbindungen ist das spätere Lösen des Bolzens schwierig.

Ausgehend vom eingangs genannten Stand der Technik liegt der Erfindung die Aufgabe zu Grunde, einen Faltenbalg vorzustellen, bei dem der Faltenbalgboden leicht am Faltenbalgkörper befestigt werden und leicht wieder gelöst werden kann. Ferner soll ein zugehöriges Verfahren vorgestellt werden. Die Aufgabe wird gelöst durch die Merkmale der unabhängigen Ansprüche. Vorteilhafte Ausführungsformen finden sich in den Unteransprüchen.

Erfindungsgemäß ist bei dem Faltenbalg ein starr mit dem ersten Bolzen verbundenes Sicherungselement für den zweiten Bolzen vorgesehen. Das Sicherungselement umfasst zwei quer zur Achse des ersten Bolzens ausgerichtete und sich gegenüberliegende Sicherungsflächen, die dazu ausgelegt sind, an den Stirnflächen des zweiten Bolzens anzuliegen, um den ersten und den zweiten Bolzen in ihren Bohrungen zu halten.

Gemäß dem erfindungsgemäßen Verfahren werden der erste und der zweite Bolzen dadurch in den fluchtenden Bohrungen gesichert, dass das Sicherungselement um die Achse des ersten Bolzens geschwenkt wird, so dass die beiden Sicherungsflächen den zweiten Bolzen zwischen sich einschließen.

Zunächst werden einige Begriffe erläutert. Der Faltenbalg umgibt den Übergang zwischen dem Vorderwagen und dem Hinterwagen nach oben, nach unten und zu den Seiten hin. Der Fältenbalgboden dient der Abdeckung nach unten. Der Faltenbalgkörper bedeckt den Übergang zu den Seiten hin und nach oben. Die Grenze zwischen Faltenbalgboden und Faltenbalgkörper kann im Bodenbereich oder im unteren Teil der Seitenwand angeordnet sein.

Ein Sicherungselement ist dann starr mit einem Bolzen verbunden, wenn die Sicherungsflächen in einem festen Abstand und in einer bestimmten Ausrichtung relativ zu dem Bolzen gehalten sind. Nicht ausgeschlossen durch den Begriff starr ist es, dass das Material in sich elastisch ist oder dass der Bolzen um seine Achse gedreht werden kann, ohne dass sich das Sicherungselement bewegt.

Eine Leiste kann ein mit dem Faltenbalgmaterial verbundenes Verstärkungselement sein. Auch möglich ist es, dass das Faltenbalgmaterial selbst so verstärkt ist, dass es als Leiste wirkt.

Durch das erfindungsgemäße Sicherungselement wird es möglich, beide Bolzen mit einer einzigen Handbewegung zu sichern. Wenn das Sicherungselement so geschwenkt ist, dass die Sicherungsflächen an den Stirnflächen des zweiten Bolzens anliegen, kann der zweite Bolzen sich weder in der einen noch in der anderen Richtung aus der Bohrung heraus bewegen. Zugleich wird aufgrund der starren Verbindung auch der erste Bolzen so gehalten, dass er sich nicht aus der Bohrung heraus bewegen kann. Dies erleichtert die Montage der Verbindung zwischen dem Faltenbalgboden und dem Faltenbalgkörper. Soll die Verbindung wieder gelöst werden, wird das Sicherungselement wiederum mit einem einzigen Handgriff in die entgegengesetzte Richtung geschwenkt und beide Bolzen können aus den Bohrungen entfernt werden.

Beim Herstellen der Verbindung zwischen dem Faltenbalgboden und dem Faltenbalgkörper kann man so vorgehen, dass in einem ersten Schritt die Leiste des Faltenbalgbodens und die Leiste des Faltenbalgkörpers so zueinander ausgerichtet werden, dass zwei fluchtende Bohrungen entstehen. Anschließend können zwei Bolzen in die beiden fluchtenden Bohrungen eingesteckt und gesichert werden. Leichter ist es jedoch in vielen Fällen, die Leisten zunächst so auszurichten, dass nur eine fluchtende Bohrung entsteht, in die einer der Bolzen eingesteckt werden kann. Dann können die beiden Leisten so um den ersten Bolzen verschwenkt werden, dass auch eine zweite fluchtende Bohrungen entsteht, in die der andere Bolzen eingesteckt werden kann. In jedem Fall werden die in den Bohrungen steckenden Bolzen abschließend durch das Sicherungselement gesichert, indem das Sicherungselement um die Achse des ersten Bolzens geschwenkt wird.

Vorzugsweise wird die starre Verbindung zwischen dem Sicherungselement und dem ersten Bolzen durch einen Verbindungsstreifen gebildet, der sich zwischen einer der Sicherungsfläche und einem Ende des ersten Bolzens erstreckt. Wenn der Verbindungsstreifen sich in derselben Ebene erstreckt wie die Sicherungsfläche, liegt er auf der Leiste auf, wenn beide Bolzen in der richtigen Position in den Bohrungen sind. Der Verbindungsstreifen kann zugleich einen Anschlag bilden, der die richtige Position des ersten Bolzens in der Bohrung definiert.

Der Verbindungsstreifen kann drehbar mit dem ersten Bolzen verbunden sein, so dass der erste Bolzen in einer festen Position bleibt, wenn der Verbindungsstreifen mit dem Sicherungselement geschwenkt wird. Vorzugsweise ist der Verbindungsstreifen aber drehfest mit dem ersten Bolzen verbunden, so dass der erste Bolzen sich dreht, wenn der Verbindungsstreifen geschwenkt wird. Am leichtesten kann der erste Bolzen gedreht werden, wenn er eine zu seiner Achse rotationssymmetrische Form hat.

Die beiden Sicherungsflächen sind durch eine Querverbindung miteinander verbunden, die um die Leiste herumgeführt ist. Dazu hat die Querverbindung vorzugsweise einen Abstand von einer sich durch die Achsen beider Bolzen erstreckenden Ebene, der mindestens doppelt so groß, weiter vorzugsweise mindestens dreimal so groß wie der Durchmesser des zweiten Bolzens.

Die Querverbindung ist so ausgebildet, dass die Sicherungsflächen von der Querverbindung in der richtigen Position am zweiten Bolzen gehalten werden. Die Sicherungsflächen sind also quer zur Achse des ersten Bolzens ausgerichtet und liegen sich gegenüber. Ferner können die Sicherungsflächen von der Querverbindung so zueinander gehalten sein, dass sie in entspanntem Zustand einen Abstand voneinander haben, der nicht größer ist und vorzugsweise um mindestens 10% kleiner ist als der Abstand der Stirnflächen des zweiten Bolzens zueinander. Die Sicherungsflächen müssen gegeneinander gespreizt werden, um den zweiten Bolzen zwischen sich einschließen zu können, und liegen dann mit einer Spannung an den Stirnflächen des zweiten Bolzens an. Die Spannung wirkt einem unbeabsichtigten Lösen des Sicherungselements von dem zweiten Bolzen entgegen.

Der Halt des Sicherungselements kann weiter verbessert werden, wenn das Sicherungselement so ausgebildet ist, dass es die Leisten oberhalb des zweiten Bolzens hintergreift. Das Sicherungselement kann dazu Klemmabschnitte umfassen, die sich an die Sicherungsflächen anschließen und die einen Abstand zueinander haben, der kleiner ist als der Abstand der Sicherungsflächen zueinander.

An die Klemmabschnitte können sich Führungsabschnitte anschließen, die nach außen geneigt sind, so dass sie einen Abstand zueinander haben, der größer ist als der Abstand der Klemmabschnitte zueinander. Wenn das Sicherungselement beim Schwenken um die Achse des ersten Bolzens an der Unterseite der Leiste anstößt, gleiten die Führungsabschnitte an den Kanten der Leiste entlang, so dass die Sicherungsflächen und die Klemmabschnitte gegeneinander gespreizt werden. Diese Gestaltung der Führungsabschnitte hat den weiteren Vorteil, dass sie beim Lösen des Sicherungselements hintergriffen werden können, um die Klemmabschnitte zu spreizen.

Ein die beiden Bolzen und das Sicherungselement umfassendes Befestigungssystem verdient gegebenenfalls auch unabhängig davon Schutz, dass es dazu verwendet wird, einen Faltenbalgboden an einem Faltenbalgkörper zu befestigen.

Die Erfindung wird nachfolgend unter Bezugnahme auf die beigefügten Zeichnungen anhand einer vorteilhaften Ausführungsform beispielhaft beschrieben. Es zeigen:
- Fig. 1: eine perspektivische Ansicht eines erfindungsge- mäßen Faltenbalgs;
- Fig. 2: ein Detail aus Fig. 1 in vergrößerter Frontalan- sicht;
- Fig. 3: eine Ausführungsform eines erfindungsgemäßen Be- festigungssystems;
- Fig. 4: das Befestigungssystem aus Fig. 3 in einer ande- ren Perspektive; und
- Fig. 5: das Befestigungssystem der Figuren 3 und 4 in eingebautem zustand.

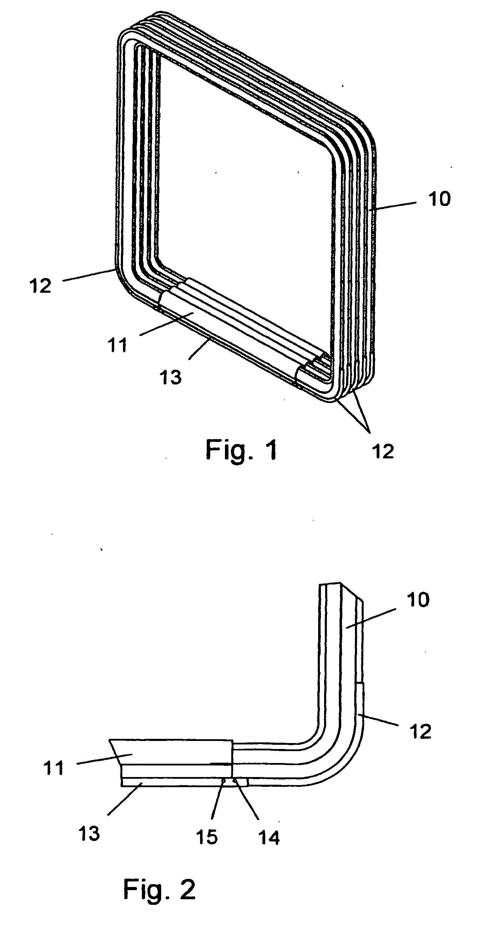

Ein in Fig. 1 gezeigter Faltenbalg umfasst einen Faltenbalgkörper 10, der den von dem Faltenbalg eingeschlossenen Durchgang nach oben und zu den Seiten hin begrenzt. Der Faltenbalgkörper 10 ist am unteren Ende der Seitenwände rechtwinklig nach innen abgewinkelt, so dass der Faltenbalgkörper 10 den Durchgang im äußeren Bereich auch nach unten hin abdeckt. An diesen Bereich des Faltenbalgkörpers 10 schließt sich ein Faltenbalgboden 11 an, der lösbar mit dem Faltenbalgkörper 10 verbunden ist. Im Übergangsbereich überlappt der Faltenbalgboden 11 den Faltenbalgkörper 10.

Der Faltenbalgkörper 10 und der Faltenbalgboden 11 bestehen aus einem flexiblen Material, das an seinen Kanten mit einer Mehrzahl von Leisten 12, 13 verstärkt ist. Eine Leiste 12 des Faltenbalgkörpers 10 sowie eine Leiste 13 des Faltenbalgbodens 11 sind in Fig. 2 gezeigt. Die Leiste 12 des Faltenbalgkörpers 10 hat im Übergangsbereich ein U-förmiges Profil. Die Leiste 13 des Faltenbalgbodens 11 ist im Übergangsbereich zwischen den Schenkeln des U-förmigen Profils eingeschlossen. In den Leisten 12, 13 sind zwei Bohrungen 14, 15 ausgebildet, die sich jeweils sowohl durch die Leiste 12 des Faltenbalgkörpers 10 als auch durch die Leiste 13 des Faltenbalgbodens 11 hindurch erstrecken. Durch Bolzen, die in die Bohrungen 14, 15 eingesteckt werden, können die Leisten 12, 13 in dieser Position zueinander fixiert werden und dadurch der Faltenbalgboden 11 am Faltenbalgkörper 10 befestigt werden. Insgesamt erfordert die Befestigung des Faltenbalgbodens 11, dass Verbindungen dieser Art an einer Mehrzahl von Falten gebildet werden.

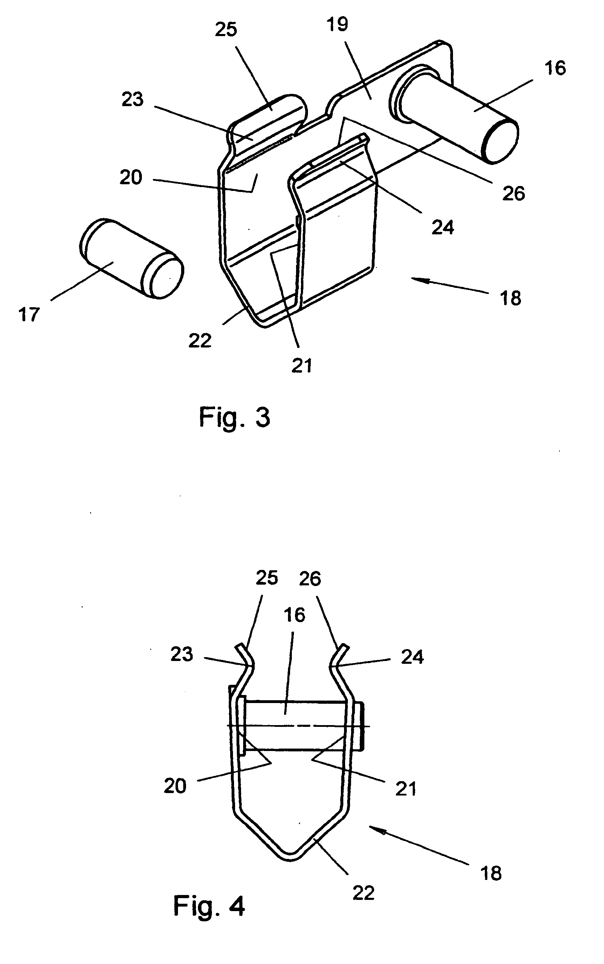

Ein Befestigungssystem, mit dem die Verbindung zwischen den Leisten 12, 13 hergestellt werden kann, ist in den Figuren 3 und 4 gezeigt. Das Befestigungssystem umfasst einen ersten Bolzen 16 und einen zweiten Bolzen 17, die beide einen Durchmesser von 6 mm haben. Der Bolzen 17 liegt als separates Teil vor. Der Bolzen 16 ist über einen verbindungsstreifen 19 mit einem Sicherungselement 18 verbunden. Das Sicherungselement 18 umfasst zwei Sicherungsflächen 20, 21, die einen Abstand zueinander haben, der etwas kleiner ist als der Abstand der Stirnflächen des zweiten Bolzens 17 zueinander. Die Sicherungsflächen 20, 21 sind über eine Querverbindung 22 miteinander verbunden. An die Sicherungsflächen 20, 21 schließen sich Klemmabschnitte 23, 24 an, deren Abstand zueinander geringer ist als der Abstand der Sicherungsflächen 20, 21 zueinander. Wiederum jenseits der Klemmabschnitte 23, 24 schließen sich Führungsabschnitte 25, 26 an, deren Abstand zueinander größer ist als der Abstand der Klemmabschnitte 23, 24 zueinander und die nach außen geneigt sind.

Soll der Faltenbalgboden 11 mittels dieses Befestigungssystems am Faltenbalgkörper 10 befestigt werden, wird der Faltenbalgboden 11 zunächst so zu dem Faltenbalgkörper 10 ausgerichtet, dass die beiden Bohrungen der Leiste 13 sich mit den beiden Bohrungen der Leiste 12 zu zwei fluchtenden Bohrungen 14, 15 ergänzen. Die Bolzen 16, 17 werden in die Bohrungen 14, 15 eingesteckt, wobei der Bolzen 16 so gedreht wird, dass das Sicherungselement 18 nach unten weist.

Sind die Bolzen 16, 17 in der richtigen Position, wird das Sicherungselement 18 so geschwenkt, dass die Führungsabschnitte 25, 26 an der Unterkante der Leiste 12 anliegen. Wird das Sicherungselement 18 nun weiter in Richtung der Leiste 12 gedrückt, gleiten die Führungsabschnitte 25, 26 an der Leiste 12 entlang, so dass das Sicherungselement 18 gespreizt wird. Die Spreizung wird durch eine leichte Elastizität der Querverbindung 22 ermöglicht. Das Sicherungselement 18 wird weiter nach oben geschoben, bis die Klemmabschnitte 23, 24 oberhalb der Leiste 12 liegen und die Leiste 12 hintergreifen. Die Sicherungsflächen 20, 21 liegen nun an den Stirnflächen des Bolzens 17 an, so dass der Bolzen 17 nicht mehr aus der Bohrung 15 herausrücken kann. Durch den Verbindungsstreifen 19, der eine starre Verbindung zwischen dem Sicherungselement 18 und dem Bolzen 16 herstellt, wird auch der Bolzen 16 fest in seiner Position gehalten und kann sich nicht mehr aus der Bohrung 14 heraus bewegen.

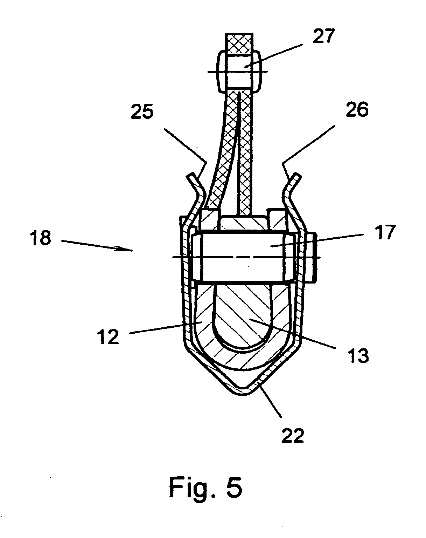

Die Leiste 13 des Faltenbalgbodens 11 ist dann wie in der Schnittdarstellung der Fig. 5 gezeigt fest mit der Leiste 12 des Faltenbalgkörpers 10 verbunden. Damit die Querverbindung 22 die Leiste 12 umgreifen kann, hat sie von der Ebene, in der die Achsen der beiden Bolzen 16, 17 liegen, einen Abstand der größer ist als der Durchmesser des Bolzens 17. Die von den Leisten 12, 13 nach oben weisenden Abschnitte des Faltenbalgmaterials können zusätzlich mit einer Niete 27 verbunden sein.

Um die Verbindung wieder zu lösen, muss das Sicherungselement 18 in entgegengesetzter Richtung geschwenkt werden, so dass der Bolzens 17 wieder freigegeben wird. Um das Sicherungselement 18 nach unten zu schwenken, kann man an den Führungsabschnitten 25, 26 angreifen und das Sicherungselement nach unten ziehen. Alternativ kann man mit einem Schraubenzieher in der Ausnehmung ansetzen, die aufgrund der abgewinkelten Form der Querverbindung 22 zwischen der Querverbindung 22 und der Leiste 12 besteht, und das Sicherungselement 18 nach unten hebeln.

## Patentansprüche

1. Faltenbalg zum Verkleiden eines Übergangs zwischen einem Vorderwagen und einem gelenkig mit dem Vorderwagen verbundenen Hinterwagen, bei dem ein Faltenbalgboden (11) lösbar an einem Faltenbalgkörper (10) befestigt ist, wobei zwei Bohrungen (14, 15) sich jeweils sowohl durch eine erste mit dem Faltenbalgboden (11) verbundenen Leiste (13) als auch durch eine zweite mit dem Faltenbalgkörper (10) verbundene Leiste 12) erstrecken und wobei ein erster Bolzen (16) in eine erste Bohrung (14) eingeführt ist, **dadurch gekennzeichnet, dass** ein als separates Teil vorliegender zweiter Bolzen (17) in eine zweite Bohrung (15) eingeführt ist und dass ein starr mit dem ersten Bolzen (16) verbundenes Sicherungselement (18) zur Aufnahme des zweiten Bolzens (17) vorgesehen ist wobei das Sicherungselement (18) zwei gegenüberstehenden Sicherungsflächen aufweist, die dazu ausgelegt sind, an den Stirnflächen des zweiten Bolzens (17) anzuliegen, um den ersten Bolzen (16) und den zweiten Bolzen (17) in den Bohrungen (14, 15) zu halten.

2. Faltenbalg nach Anspruch 1, **dadurch gekennzeichnet, dass** die Sicherungsflächen (20, 21) quer zur Achse des ersten Bolzens (16) ausgerichtet sind und sich gegenüberliegen.

3. Faltenbalg nach einem der Ansprüche 1 bis 2, **dadurch gekennzeichnet, dass** das Sicherungselement (18) eine Querverbindung (22) zwischen den Sicherungsflächen (20, 21) umfasst und dass die Querverbindung (22) einen Abstand von einer sich durch die Achsen beider Bolzen (16, 17) erstreckenden Ebene hat, der mindestens doppelt so groß, vorzugsweise dreimal so groß ist wie der Durchmesser des zweiten Bolzens (17).

4. Faltenbalg nach Anspruch 3, **dadurch gekennzeichnet, dass** die Querverbindung (22) elastisch ist.

5. Faltenbalg nach einem der Ansprüche 1 bis 4, **dadurch gekennzeichnet, dass** sich Klemmabschnitte (23, 24) an die Sicherungsflächen (20, 21) anschließen und dass der Abstand der Klemmabschnitte (23, 24) zueinander kleiner ist als der Abstand der Sicherungsflächen (20, 21) zueinander.

6. Faltenbalg nach Anspruch 5, **dadurch gekennzeichnet, dass** sich Führungsabschnitte (25, 26) an die Klemmabschnitte (23, 24) anschließen und dass die Führungsabschnitte (25, 26) nach außen geneigt sind, so dass der Abstand der Führungsabschnitte (25, 26) zueinander größer ist als der Abstand der Klemmabschnitte (23, 24) zueinander.

7. Faltenbalg nach einem der Ansprüche 1 bis 6, **dadurch gekennzeichnet, dass** der Abstand der Sicherungsflächen (20, 21) zueinander in entspanntem Zustand nicht größer ist und vorzugsweise um mindestens 10% kleiner ist als der Abstand der Stirnflächen des zweiten Bolzens (17) zueinander.

8. Faltenbalg nach einem der Ansprüche 1 bis 7, **dadurch gekennzeichnet, dass** der erste Bolzen (16) eine zu seiner Achse rotationssymmetrische Form hat.

9. Verfahren zum Befestigen eines Faltenbalgbodens (11) an einem Faltenbalgkörper (10), mit den folgenden Schritten:
a. Bereitstellen eines starr mit zwei Sicherungsflächen (20, 21) verbundenen ersten Bolzens (16) und eines als separates Teil vorliegenden zweiten Bolzens (17);
b. Ausrichten einer mit dem Faltenbalgboden (11) verbundenen, zwei Bohrungen aufweisenden ersten Leiste (13) relativ zu einer mit dem Faltenbalgkörper (10) verbundenen, zwei Bohrungen aufweisenden zweiten Leiste (12) derart, dass sich die Bohrungen zu einer ersten fluchtenden Bohrung (14) und einer zweiten fluchtenden Bohrung (15) ergänzen;
c. Einführen des ersten Bolzens (16) und des zweiten Bolzens (17) in die fluchtenden Bohrungen (14, 15); und
d. Schwenken der Sicherungsflächen (20, 21) um die Achse des ersten Bolzens (16), so dass die beiden Sicherungsflächen (20, 21) den zweiten Bolzen (17) zwischen sich einschließen.

10. Verfahren nach Anspruch 10, **dadurch gekennzeichnet, dass** in den Schritten b. und c. die zweite Bohrung (14) erst dann ausgerichtet wird, wenn ein erster Bolzen (16) bereits in die erste fluchtende Bohrung (15) eingeführt ist.

## Claims

1. Gangway bellows for lining an intercommunicating gangway between a front rail car and a rear rail car which is connected in an articulated fashion to the front rail car, in which a gangway bellows floor (11) is releasably attached to a gangway bellows body (10), wherein two drill holes (14, 15) respectively extend both through a first strip (13) which is connected to the gangway bellows floor (11) and through a second strip (12) which is connected to the gangway bellows body (10), and wherein a first bolt (16) is introduced into a first drill hole (14), **characterized in that** a second bolt (17) which is provided as a separate component is introduced into a second drill hole (15), that a securing element (18) which is rigidly connected to the first bolt (16) is provided for receiving the second bolt (17), wherein the securing element (18) has two securing faces which are located opposite one another and which are configured to bear against the end faces of the second bolt (17) in order to hold the first bolt (16) and the second bolt (17) in the drill holes (14, 15).

2. Gangway bellows according to Claim 1, **characterized in that** the securing faces (20, 21) are oriented transversely with respect to the axis of the first bolt (16) and are located opposite one another.

3. Gangway bellows according to one of Claims 1 to 2, **characterized in that** the securing element (18) comprises a cross connection (22) between the securing faces (20, 21), and **in that** the distance between the cross connection (22) and a plane which extends through the axes of the two bolts (16, 17) is at least twice as large, preferably three times as large as the diameter of the second bolt (17).

4. Gangway bellows according to Claim 3, **characterized in that** the cross connection (22) is elastic.

5. Gangway bellows according to one of Claims 1 to 4, **characterized in that** clamping sections (23, 24) adjoin the securing faces (20, 21), and **in that** the distance between the clamping sections (23, 24) is smaller than the distance between the securing faces (20, 21).

6. Gangway bellows according to Claim 5, **characterized in that** guide sections (25, 26) adjoin the clamping sections (23, 24), and **in that** the guide sections (25, 26) are inclined toward the outside, with the result that the distance between the guide sections (25, 26) is greater than the distance between the clamping sections (23, 24).

7. Gangway bellows according to one of Claims 1 to 6, **characterized in that** the distance between the securing faces (20, 21) in the relaxed state is not larger than, and is preferably at least 10% smaller than, the distance between the end faces of the second bolt (17).

8. Gangway bellows according to one of Claims 1 to 7, **characterized in that** the first bolt (16) has a shape which is rotationally symmetrical with respect to its axis.

9. Method for attaching a gangway bellows floor (11) to a gangway bellows body (10), having the following steps:
a. A first bolt (16) which is rigidly connected to two securing faces (20, 21), and a second bolt (17) which is provided as a separate component, are made available;
b. A first strip (13), which is connected to the gangway bellows floor (11) and has two drill holes, is oriented relative to a second strip (12), which is connected to the gangway bellows body (10) and has two drill holes, in such a way that the drill holes complement one another to form a first aligned drill hole (14) and a second aligned drill hole (15);
c. The first bolt (16) and the second bolt (17) are introduced into the aligned drill holes (14, 15); and
d. The securing faces (20, 21) are pivoted about the axis of the first bolt (16), with the result that the two securing faces (20, 21) enclose the second bolt (17) between them.

10. Method according to Claim 10, **characterized in that** in steps b. and c. the second drill hole (14) is not oriented until a first bolt (16) has already been introduced into the first aligned drill hole (15).

## Revendications

1. Soufflet de passage pour couvrir un couloir d'intercirculation entre un véhicule avant et un véhicule arrière, relié de manière articulée au véhicule avant, dans lequel un plancher (11) est fixé de manière amovible à un bâti (10) du soufflet, sachant que deux forures (14, 15) passent à travers une première barre (13) assemblée au plancher (11) du soufflet, ainsi qu'une deuxième barre (12) assemblée au bâti (10) du soufflet, et un premier boulon (16) est introduit dans une première forure (14), **caractérisé en ce qu'**un deuxième boulon (17), formant une pièce séparée, est introduit dans une deuxième forure (15), et **en ce qu'**un élément de consolidation (18), relié de manière fixe au premier boulon (16), est prévu pour recevoir le deuxième boulon (17), ledit élément de consolidation (18) comportant deux surfaces de blocage face à face, qui sont conçues pour venir en appui contre les faces frontales du deuxième boulon (17), afin de maintenir le premier boulon (16) et le deuxième boulon (17) dans les forures (14, 15).

2. Soufflet de passage selon la revendication 1, **caractérisé en ce que** les surfaces de blocage (20, 21) sont orientées transversalement à l'axe du premier boulon (16) et sont situées en regard l'une de l'autre.

3. Soufflet de passage selon l'une des revendications 1 à 2, **caractérisé en ce que** l'élément de consolidation (18) comporte une jonction transversale (22) entre les surfaces de blocage (20, 21) et **en ce que** la jonction transversale (22) est située à distance d'un plan qui passe par les axes des deux boulons (16, 17), laquelle est au moins deux fois, en particulier trois fois supérieure au diamètre du deuxième boulon (17).

4. Soufflet de passage selon la revendication 3, **caractérisé en ce que** la jonction transversale (22) est élastique.

5. Soufflet de passage selon l'une quelconque des revendications 1 à 4, **caractérisé en ce que** des tronçons de serrage (23, 24) sont adjacents aux surfaces de blocage (20, 21) et **en ce que** la distance entre les tronçons de serrage (23, 24) est inférieure à la distance entre les surfaces de blocage (20, 21).

6. Soufflet de passage selon la revendication 5, **caractérisé en ce que** des tronçons de guidage (25, 26) sont adjacents aux tronçons de serrage (23, 24) et **en ce que** les tronçons de guidage (25, 26) sont inclinés vers l'extérieur, de telle sorte que la distance entre les tronçons de guidage (25, 26) est supérieure à la distance entre les tronçons de serrage (23, 24).

7. Soufflet de passage selon l'une quelconque des revendications 1 à 6, **caractérisé en ce que** la distance entre les surfaces de blocage (20, 21) à l'état relâché n'est pas supérieure et, de préférence, est au minimum inférieure de 10 % à la distance entre les faces frontales du deuxième boulon (17).

8. Soufflet de passage selon l'une quelconque des revendications 1 à 7, **caractérisé en ce que** le premier boulon (16) a une forme symétrique en révolution par rapport à son axe.

9. Procédé pour la fixation d'un plancher (11) d'un soufflet de passage sur un bâti (10) du soufflet de passage, comportant les étapes suivantes :
a. mise à disposition d'un premier boulon (16), relié de manière fixe à deux surfaces de blocage (20, 21), et d'un deuxième boulon (17), formant une pièce séparée ;
b. alignement d'une première barre (13), munie de deux forures et assemblée au plancher (11) du soufflet, par rapport à une deuxième barre (12), munie de deux forures et assemblée au bâti (10) du soufflet, de telle sorte que les forures se complètent pour forme une première forure (14) en alignement et une deuxième forure (15) en alignement ;
c. introduction du premier boulon (16) et du deuxième boulon (17) dans les forures (14, 15) en alignement ; et
d. pivotement des surfaces de blocage (20, 21) autour de l'axe du premier boulon (16), de telle sorte que les deux surfaces de blocage (20, 21) enserrent entre elles le deuxième boulon (17).

10. Procédé selon la revendication 10, **caractérisé en ce que** dans les étapes b. et c., l'alignement de la deuxième forure (14) est effectué seulement lorsqu'un premier boulon (16) est déjà introduit dans la première forure (15) en alignement.
